# FASCICULE DE BREVET EUROPEEN

(11) **EP 2 628 160 B1**
(45) Date de publication et mention de la délivrance du brevet: **17.12.2014**
(21) Numéro de dépôt: 11832119.9
(22) Date de dépôt: 14.10.2011
(51) Int. Cl.: G21C 19/20, G21C 19/19, G21C 13/02, G21C 19/02

(54) **Dispositif de support momentané des équipements internes supérieurs sur une cuve d'un réacteur nucléaire à eau sous pression**
Vorrichtung zur vorübergehenden Stützung der oberen inneren Teile auf einem Gefäss eines Druckwasserreaktors
Device for momentary support of the upper internal parts on a vessel of a pressurised water reactor

(30) Priorité: 14.10.2010 FR 1058384
(43) Date de publication de la demande: 21.08.2013
(73) Titulaire: Areva NP, 92400 Courbevoie (FR)
(72) Inventeur: CAHOUET, Laurent, F-71150 Chaudenay (FR); BUCHOT, Frédéric, F-71380 Epervans (FR)
(74) Mandataire: Blot, Philippe Robert Emile
(86) Numéro de dépôt international: PCT/FR2011/052399
(87) Numéro de publication internationale: WO 2012/049432

(56) Documents cités:
- FR-A1- 2 937 172
- US-A- 4 647 422
- US-A- 4 696 786
- US-A1- 2009 245 451

## Description

La présente invention concerne un dispositif de support momentané des équipements internes supérieurs sur une cuve d'un réacteur nucléaire à eau sous pression au cours d'une opération de chargement ou de déchargement du coeur de ce réacteur.

Les réacteurs nucléaires à eau sous pression comportent, à l'intérieur du bâtiment du réacteur, une cuve contenant le coeur du réacteur nucléaire constitué par des assemblages combustibles, généralement de forme prismatique droit, disposés verticalement et de manière juxtaposée.

A l'intérieur de la cuve du réacteur nucléaire, sont disposés des équipements internes assurant en particulier le support et le maintien des assemblages combustibles du coeur du réacteur nucléaire.

Un premier ensemble d'équipements internes assurant le support et le maintien latéral des assemblages combustibles constitue les équipements internes inférieurs (EII) et un second ensemble assurant le maintien des assemblages combustibles dans la direction verticale, c'est-à-dire vers la direction axiale de ces assemblages ainsi que le guidage des barres de commande de la réactivité du coeur, constitue les équipements internes supérieurs (EIS).

Les équipements internes supérieurs comportent en particulier, à leurs parties inférieures, une plaque destinée à venir reposer sur les parties supérieures des assemblages combustibles, cette plaque étant appelée plaque supérieure de coeur (PSC).

La plaque supérieure de coeur comporte en saillie par rapport à sa face intérieure destinée à venir reposer sur les parties des assemblages combustibles, c'est-à-dire sur les embouts supérieurs de ces assemblages combustibles, des pions de centrage et de positionnement, destinés à venir s'engager dans les ouvertures des embouts supérieurs des assemblages combustibles.

Généralement, la plaque supérieure de coeur comporte deux pions de guidage vis-à-vis de chacun des assemblages combustibles, destinés à être introduits dans deux ouvertures de l'embout supérieur, généralement de forme cylindrique, disposées suivant une diagonale de l'embout.

Pendant le fonctionnement du réacteur nucléaire, le combustible des assemblages du coeur subit une certaine usure, de sorte qu'il est nécessaire de remplacer périodiquement les assemblages du coeur du réacteur nucléaire.

On effectue donc régulièrement des opérations de déchargement et de rechargement d'une partie du coeur du réacteur nucléaire. Pour cela, on réalise un arrêt à froid du réacteur et on démonte les goujons de fermeture du couvercle obturant la partie d'extrémité supérieure de la cuve dans laquelle est placé le coeur du réacteur nucléaire. Après avoir retiré les goujons, on visse dans deux ou trois taraudages, une colonne de guidage et on procède au retrait du couvercle de la cuve du réacteur nucléaire. La partie supérieure de la cuve recouverte par le couvercle débouche donc dans le fond de la piscine du réacteur nucléaire qui est remplie d'eau pour qu'on puisse réaliser des opérations de déchargement et de rechargement du coeur sous une hauteur d'eau suffisante pour la protection des opérateurs.

Pour pouvoir accéder aux assemblages combustibles du coeur, après ouverture du couvercle de la cuve, il est nécessaire d'enlever les équipements internes supérieurs qui recouvrent la partie supérieure du coeur. Pour cela, les équipements internes supérieurs du réacteur nucléaire sont fixés à un support qui peut être pris en charge par un moyen de manutention, tel que le pont polaire du réacteur nucléaire dans son levage et sa manutention. On peut ainsi déposer les équipements internes supérieurs sur un stand de stockage de ces équipements situés dans un compartiment de la piscine du réacteur nucléaire.

Au cours des opérations de chargement ou de déchargement du coeur, des problèmes sur divers équipements peuvent nécessiter une vidange du compartiment de la piscine où se trouve le stand de support des équipements internes supérieurs pour procéder par exemple à une réparation. Dans ce cas, le seul endroit pour entreposer les équipements internes supérieurs sous eau est le compartiment de la cuve du réacteur nucléaire.

Si le chargement ou le déchargement du coeur est terminé, les opérateurs procèdent selon la procédure habituelle et reposent les équipements internes supérieurs sur les équipements internes inférieurs ce qui libère le stand. Les opérateurs peuvent isoler le compartiment de la piscine du stand du compartiment de la piscine de la cuve et vidanger ce compartiment de la piscine du stand.

Si le coeur est partiellement déchargé, les opérateurs doivent également poser les équipements internes supérieurs sur la cuve, mais cela pose un problème car les assemblages combustibles n'étant plus calés entre eux, leur positionnement n'est pas garanti et il y a un risque d'interférence entre les pions de la plaque supérieure de coeur et les têtes d'assemblage ou les pommeaux de grappe.

FR 2 937 172 décrit un exemple de dispositif de support momentané des équipements internes supérieurs. US 4 696 786 et US 4 647 422 décrivent d'autres exemples de tels dispositifs de support.

L'invention a donc pour but de proposer un dispositif de support momentané des équipements internes supérieurs sur une cuve d'un réacteur nucléaire à eau sous pression qui permet d'éviter ces inconvénients et qui permet de poser les équipements internes supérieurs sur la cuve avec un coeur partiellement chargé sans risquer d'endommager les éléments de centrage des assemblages combustibles, ni les revêtements internes de la cuve du réacteur nucléaire.

L'invention a donc pour objet un dispositif de support momentané des équipements internes supérieurs sur une cuve d'un réacteur nucléaire à eau sous pression au cours d'une opération de chargement ou de déchargement du coeur après le retrait d'un couvercle de fermeture de la cuve, ladite cuve comportant, dans sa partie supérieure, une bride de fixation du couvercle contenant des assemblages combustibles formant le coeur, caractérisé en ce qu'il comprend au moins deux ensembles comportant chacun un châssis formé d'une partie centrale de centrage et de positionnement sur la bride de la cuve et de deux bras latéraux, s'étendant de part et d'autre de la partie centrale, chaque bras latéral comportant à son extrémité libre, une cale de centrage sur le bord interne de la cuve et d'appui des équipements internes supérieurs au-dessus de la position de fixation sur les équipements internes inférieurs.

Selon d'autres caractéristiques de l'invention :
- la partie centrale du châssis comporte un orifice de direction sensiblement verticale et de centrage sur un élément de guidage prévu sur la bride de cuve,
- l'élément de guidage est formé par une colonne montée dans un taraudage de la bride de cuve, au moment du démontage du couvercle,
- l'élément de guidage est formé par une broche de guidage du couvercle, prévue sur la bride de cuve,
- la paroi interne de l'orifice est revêtue d'un matériau à faible coefficient de frottement,
- chaque cale présente une hauteur déterminée pour que son bord inférieur repose sur les équipements internes inférieurs et que son bord supérieur supporte les équipements internes supérieurs à un niveau situé au-dessus de la bride de cuve,
- au moins une face verticale de chaque cale du côté de la cuve est revêtue d'un matériau à faible coefficient de frottement,
- le dispositif comprend deux châssis opposés et répartis à 180° l'un par rapport à l'autre sur la bride de cuve, et
- le dispositif comprend trois châssis répartis différemment les uns par rapport aux autres sur la bride de cuve.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue schématique en coupe axiale d'une cuve d'un réacteur nucléaire renfermant le coeur et les structures internes du réacteur,
- la figure 2 est une vue schématique en perspective d'un ensemble d'un dispositif de support momentané des équipements internes supérieurs, conforme à l'invention,
- la figure 3 est une vue schématique en perspective montrant la pose des ensembles du dispositif de support sur une bride d'une cuve d'un réacteur nucléaire,
- la figure 4 est une vue schématique en élévation d'un ensemble du dispositif de support des équipements internes supérieurs, et
- la figure 5 est une vue schématique en perspective d'une extrémité d'un châssis d'un ensemble du dispositif de support des équipements internes supérieurs.

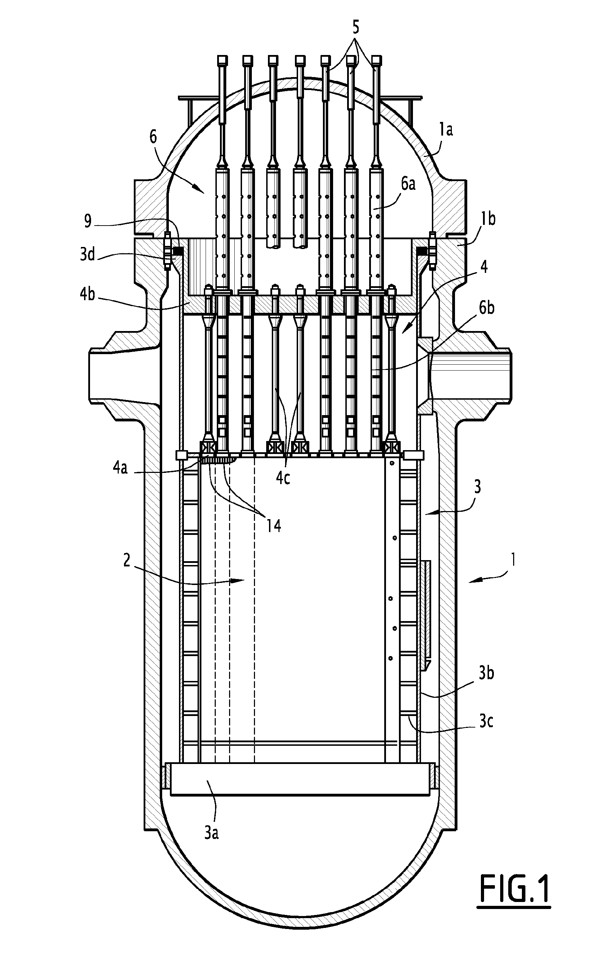

Sur la figure 1, on a représenté une cuve d'un réacteur nucléaire à eau sous pression désignée de manière générale par la référence 1.

La cuve, de forme générale cylindrique, est formée à sa partie inférieure par un fond bombé et comporte une extrémité supérieure qui est fermée, pendant le fonctionnement du réacteur nucléaire, par un couvercle bombé 1 a.

La cuve 1 renferme le coeur 2 du réacteur constitué par des assemblages combustibles de forme générale prismatique disposés verticalement et de manière juxtaposée à l'intérieur des structures internes désignées de manière générale par le repère 3, ces structures internes constituant des équipements internes inférieurs du réacteur nucléaire.

Les équipements internes inférieurs 3 (EII) comportent en particulier une plaque de support du coeur 3a, une enveloppe de coeur 3b et un cloisonnement 3c de maintien latérale du coeur 2 du réacteur nucléaire. Sur la partie supérieure du coeur repose un second ensemble de structure interne désigné de manière générale par le repère 4 et appelé équipements internes supérieurs (EIS) du réacteur nucléaire.

Les équipements internes supérieurs 4 comportent en particulier une plaque inférieure 4a par l'intermédiaire de laquelle ces équipements internes supérieurs reposent sur la partie supérieure du coeur 2 et qui est appelée plaque supérieure de coeur (PSC). Les équipements internes supérieurs 4 comportent de plus une plaque supérieure de forte épaisseur 4b constituant la plaque de support des tubes guides des barres de commande du réacteur nucléaire. Des colonnes entretoises 4c assurent l'assemblage et l'entretoisement des plaques 4a et 4b qui sont parallèles entre elles et placées horizontalement dans le réacteur nucléaire.

Le couvercle 1 a de la cuve 1 est traversé par des tubes 5 ayant une disposition verticale, appelés adaptateurs, utilisés pour assurer le passage de prolongateurs de déplacement de grappes de commande dans certains assemblages du coeur. Les prolongateurs et les grappes de commande du réacteur nucléaire sont placés à l'intérieur de tubes de guidage 6 constituant des composants des équipements internes supérieurs 4. Les tubes de guidage 6 comportent une partie supérieure 6a reposant sur la plaque supérieure 4b des équipements internes supérieurs 4 et une partie inférieure 6b intercalée et fixée entre la plaque de support des tubes guides 4b et la plaque supérieure de coeur 4a des équipements internes supérieurs 4.

La plaque supérieure de coeur 4a comporte des pions de centrage 14 destinés à venir s'engager chacun dans une ouverture de l'embout supérieur d'un assemblage combustible. De cette manière, les équipements internes supérieurs 4 assurent le maintien des parties supérieures des assemblages combustibles qui sont juxtaposés dans le coeur 2 pour constituer un réseau d'assemblages, généralement à maille carrée.

La cuve 1 comporte à sa partie supérieure une bride 1 b dont la face supérieure est recouverte d'une protection appropriée de type connu, non représentée. Cette bride 1 b comporte des taraudages, non représentés, pour la fixation du couvercle 1a par l'intermédiaire de goujons, non représentés.

L'enveloppe de coeur 3b comporte, à sa partie supérieure, une bride 3d sur laquelle vient en appui la plaque supérieure 4b des équipements internes supérieurs 4 par l'intermédiaire d'un anneau de calage 9.

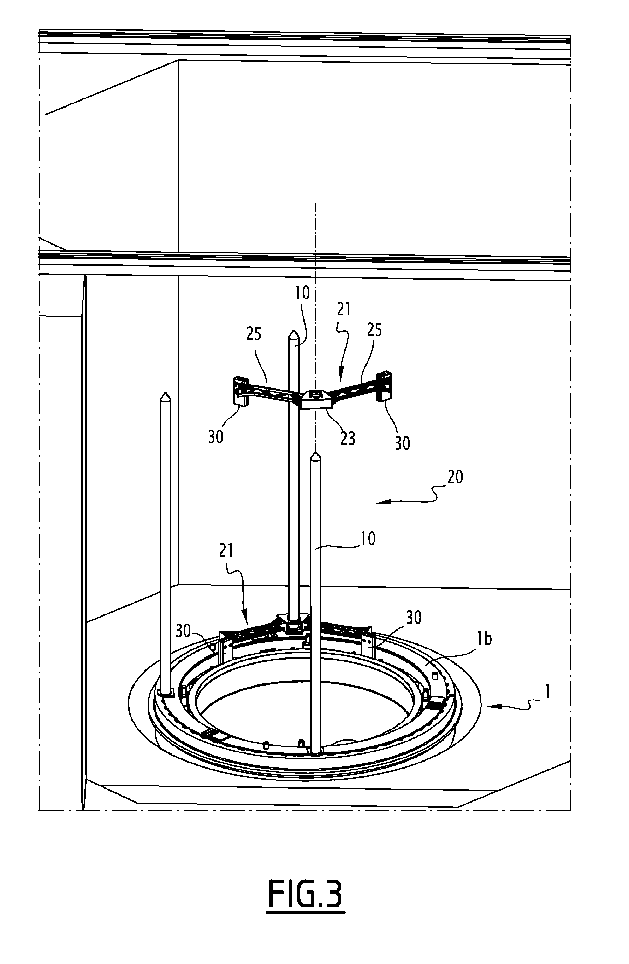

Pour effectuer le rechargement du coeur 2 du réacteur nucléaire en assemblages combustibles, après la mise à l'arrêt de refroidissement du réacteur nucléaire, on réalise le démontage du couvercle 1 a de la cuve 1. Pour cela, on retire les goujons, non représentés, de fixation du couvercle 1 a et on visse dans au moins deux taraudages, de préférence opposés, une colonne de guidage 20, ainsi que montré à la figure 3. Ensuite, on effectue le levage et la manutention de ce couvercle afin de le déposer sur un stand de réception à l'intérieur du bâtiment du réacteur.

Après le retrait de ce couvercle 1 a, on effectue le levage et la manutention des équipements internes supérieurs 4 du réacteur nucléaire de manière à déposer ces équipements internes supérieurs sur un stand de stockage, non représenté, disposé dans un compartiment de la piscine du réacteur.

On peut alors avoir accès à la partie supérieure des assemblages combustibles à l'intérieur de la cuve pour effectuer le rechargement du coeur en utilisant la machine de chargement du réacteur nucléaire.

Les opérations de rechargement sont effectuées sous eau, la piscine du réacteur étant remplie d'eau.

Pendant les opérations de chargement ou de déchargement du coeur du réacteur nucléaire, des problèmes sur divers équipements peuvent nécessiter une vidange du compartiment de la piscine où sont stockés les équipements internes supérieurs 4 afin de pouvoir procéder à une réparation. Dans ce cas, le seul emplacement pour entreposer ces équipements internes supérieurs sous eau est le compartiment de la cuve 1. Si le coeur est partiellement déchargé, la pose des équipements internes supérieurs 4 sur la cuve 1 pose un problème car les assemblages combustibles n'étant pas calés, entre eux, leur positionnement n'est pas garanti et il y a un risque d'interférence entre les pions de la plaque supérieure de coeur et les têtes d'assemblage ou les pommeaux de grappes.

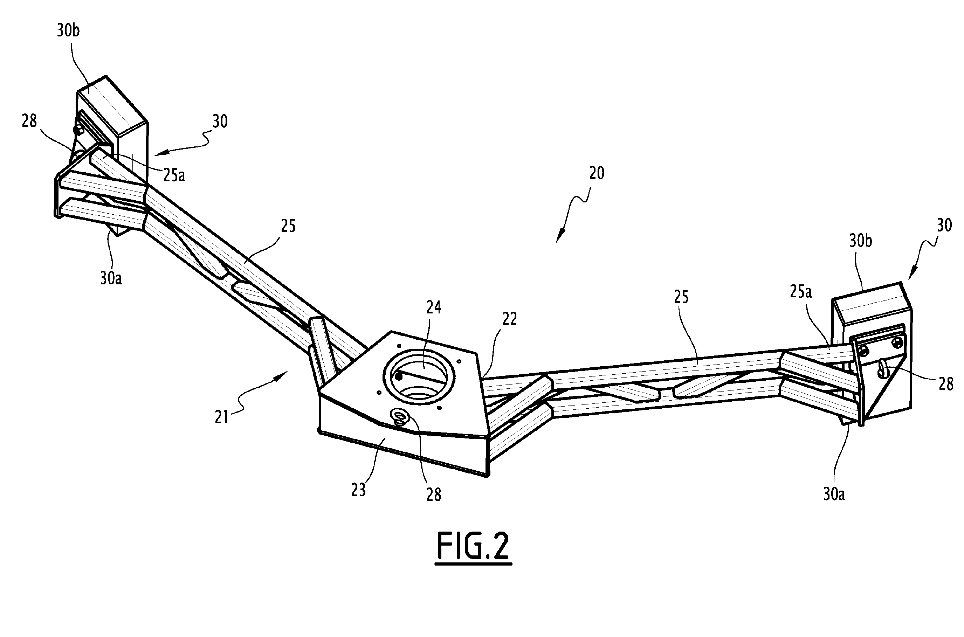

Afin d'éviter ces risques, les opérateurs utilisent un dispositif de support momentané des équipements internes supérieurs 4 sur la cuve 1 du réacteur nucléaire, conforme à l'invention et désigné dans son ensemble par la référence 20 sur les figures 2 à 4.

Ce dispositif de support 20 momentané des équipements internes supérieurs 4 se compose de deux ensembles identiques, désignés chacun par le repère 21.

En se reportant maintenant à la figure 2, on va décrire un ensemble 21.

L'ensemble 21 se compose d'un châssis 22 comportant une partie centrale 23 de centrage et de positionnement sur la bride 1 b de la cuve 1. Cette partie centrale 23 présente une forme sensiblement parallélépipédique et est constituée par exemple d'un assemblage de plaques métalliques soudées entre elles.

D'une manière générale, la partie centrale 23 comporte un orifice 24 de direction sensiblement verticale et de centrage sur un élément de guidage prévu sur la bride de cuve 1 b.

Dans l'exemple de réalisation représenté sur les figures, l'élément de guidage est formé par une colonne 10 montée dans un taraudage, non représenté, de la bride de cuve 1 b au moment du démontage du couvercle 1, ainsi qu'on le verra ultérieurement.

La paroi interne de l'orifice 24 est revêtue d'un matériau à faible coefficient de frottement, par exemple un polymère, pour réduire tout risque de coincement sur la colonne de guidage 10 correspondante La dimension de l'orifice 24 et notamment son diamètre interne, est adaptée au diamètre externe de la colonne de guidage 10.

Le châssis 22 comporte également deux bras latéraux 25 symétriques ou non et opposés, s'étendant de part et d'autre de la partie centrale 23. Chaque bras 25 est formé par exemple par un assemblage de poutrelles métalliques soudées entre elles.

Chaque bras latéral 25 porte, à son extrémité libre 25a, une cale 30 de centrage sur le bord interne de la cuve 1 et d'appui des équipements internes supérieurs 4 au-dessus de sa position de fixation sur les équipements internes inférieurs 3.

Au moins la surface du bord inférieur 30a de chaque cale 30 destinée à venir au moins en appui sur la bride 3d de l'enveloppe 3b des équipements internes inférieurs 3 et la surface du bord supérieur 30b de chaque cale 30 destinée à former une surface d'appui des équipements internes supérieurs 4 sont revêtues d'un matériau à faible coefficient de frottement, comme par exemple un polymère.

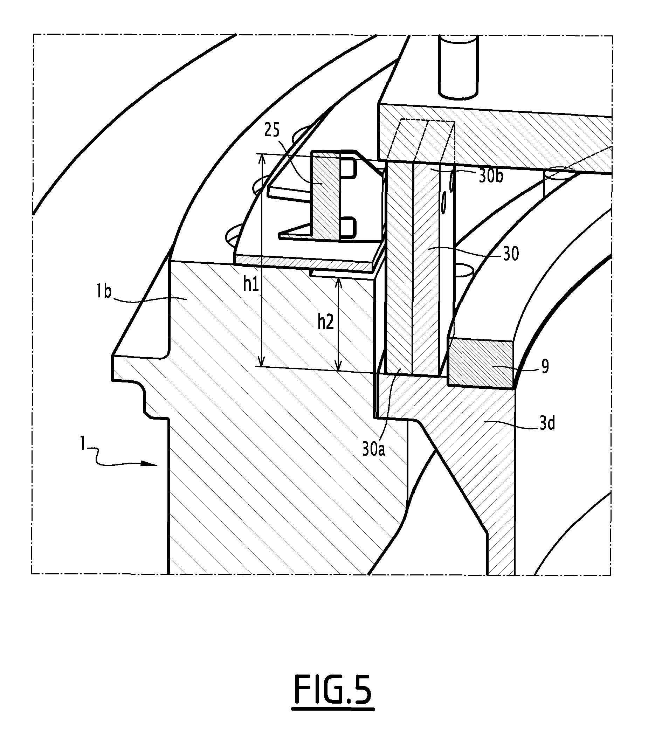

Ainsi que montré à la figure 5, la hauteur h1 de chaque cale 30 est supérieure à la hauteur h2 séparant la surface de la bride 3d de l'enveloppe 3 et la surface de la bride de cuve 1 b, afin de placer les équipements internes supérieurs 4 à un niveau situé au-dessus de la bride de cuve 1 b lorsque ces équipements internes supérieurs 4 sont disposés de manière momentanée sur la cuve 1 du réacteur nucléaire.

Ainsi que montré la figure 2, le châssis 22 comporte des points d'ancrage 28 pour permettre son élinguage par exemple par le pont polaire, ou le palan de la machine de chargement ou par tout autre moyen de levage annexe ou auxiliaire.

Après avoir placé au moins deux colonnes de guidage 10 à l'opposé l'une de l'autre sur la bride de cuve 1 b, ainsi que montré à la figure 3 et après avoir retiré le couvercle 1a, les opérateurs pour placer les deux ensembles 21 agissent de la manière suivante.

Un premier châssis 22 est accroché par les points d'ancrage 28 aux élingues du pont polaire et ce châssis est soulevé de manière à le placer au-dessus d'une colonne de guidage 10, comme montré à la figure 3. Le châssis 22 est descendu progressivement pour placer la colonne de guidage 10 à l'intérieur de l'orifice 24, puis le châssis 22 est descendu jusqu'à la bride de cuve 1 b. La mise en place autour de la colonne de guidage 10 et l'indexage en rotation se font de manière visuelle, en jouant sur les élingues pour le positionnement angulaire.

Le châssis 22 est auto-centrant sur la bride de cuve 1 b car les cales 30 sont guidées par la paroi interne de la cuve 1, ainsi que montré à la figure 5. De ce fait, le châssis 22 vient se centrer facilement sur la bride de cuve 1 b grâce au guidage de la colonne de guidage 10 dans l'orifice 24 de la partie centrale 23 et grâce aux cales 30 qui viennent s'appuyer sur la paroi interne de la cuve 1.

Les opérateurs procèdent de manière analogue pour le second châssis 22 placé sur la colonne de guidage 10 située en regard de l'autre colonne de guidage 10, ainsi que représenté à la figure 3.

Lorsque les deux châssis 22 sont placés sur la bride de cuve 1 b, le bord inférieur 30a de chaque cale 30 est en appui sur la bride 3d de l'enveloppe 3b des équipements internes inférieurs 3.

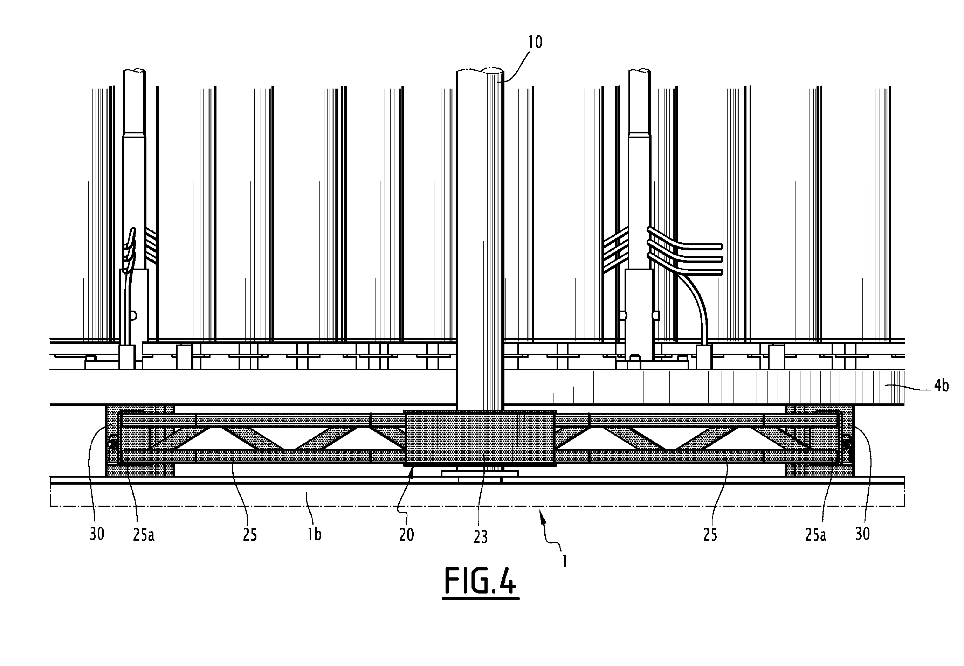

Après avoir décroché les élingues du pont polaire, et les avoir laissées en attente en bord de piscine, les opérateurs peuvent placer les équipements internes supérieurs 4 sur les châssis 22. Pour cela, les équipements internes supérieurs 4 sont retirés du compartiment de la piscine du réacteur au moyen du pont polaire et ces équipements internes supérieurs 4 sont posés sur le bord supérieur 30b des deux cales 30 de chaque châssis 22, comme cela apparaît sur les figures 4 et 5.

Une fois posée sur les cales 30 des châssis 22, ces équipements internes supérieurs 4 se trouvent au-dessus de leur position de fixation sur les équipements internes inférieurs 3, et plus particulièrement au-dessus de la bride de cuve 1 b.

Cette position permet de garantir la mise en place des équipements sous eau à distance sans risque vis-à-vis d'une éventuelle chute sur les assemblages combustibles lorsque l'on souhaite reposer les équipements internes supérieurs sur la bride de cuve avec le coeur partiellement chargé, et de gagner en temps d'intervention.

Selon une variante, au lieu d'utiliser deux châssis 22 opposés et répartis à 180° l'un par rapport à l'autre sur la bride de cuve 1 b, on peut utiliser trois châssis 22 répartis différemment les uns par rapport aux autres sur la bride de cuve 1 b, chaque châssis 22 étant placé sur une colonne de guidage 10.

Selon une variante, l'élément de guidage prévu sur la bride de cuve pour le positionnement de chaque châssis 22 est formé par une broche de guidage, non représentée, du couvercle 1 a destinée à pénétrer dans l'orifice 24. Dans ce cas également, la dimension et la forme de l'orifice 24 sont adaptées à celles de la broche de guidage.

Le dispositif de support selon l'invention permet d'éviter tout risque d'interférence entre les pions de la plaque supérieure et les têtes des assemblage ou les pommeaux de grappes, étant donné que les équipements internes supérieurs sont placés plus haut que leur position théorique sur les équipements internes inférieurs. Le dispositif de support selon l'invention peut être utilisé toutes les fois où des problèmes de déchargement du coeur d'un réacteur nucléaire à eau sous pression nécessitent la repose temporaire des équipements internes supérieurs en cuve.

## Revendications

1. Dispositif de support (20) momentané des équipements internes supérieurs (4) sur une cuve (1) d'un réacteur nucléaire à eau sous pression au cours d'une opération de chargement ou de déchargement du coeur (2) après le retrait d'un couvercle (1a) de fermeture de la cuve (1), ladite cuve (1) comportant à sa partie supérieure une bride (1b) de fixation du couvercle (1a) et contenant des assemblages combustibles formant le coeur (2), **caractérisé en ce qu'**il comprend au moins deux ensembles (21) comportant chacun un châssis (22) formé d'une partie centrale (23) de centrage et de positionnement sur la bride de cuve (1b) et de deux bras latéraux (25), s'étendant de part et d'autre de la partie centrale (23), chaque bras latéral (25) comportant, à son extrémité libre (25a), une cale (30) de centrage sur le bord interne de la cuve (1) et d'appui des équipements internes supérieurs (4) au-dessus de leur position de fixation sur les équipements internes inférieurs (3).

2. Dispositif selon la revendication 1, **caractérisé en ce que** la partie centrale (23) du châssis (22) comporte un orifice (24) de direction sensiblement verticale et de centrage sur un élément de guidage (10) prévu sur la bride de cuve (1 b).

3. Dispositif selon la revendication 2, **caractérisé en ce que** l'élément de guidage est formé par une colonne (10) montée dans un taraudage de la bride de cuve (1b), au moment du démontage du couvercle (1 a).

4. Dispositif selon la revendication 2, **caractérisé en ce que** l'élément de guidage est formé par une broche de guidage du couvercle (1 a), prévue sur la bride de cuve (1b).

5. Dispositif selon la revendication 2, **caractérisé en ce que** la paroi interne de l'orifice (24) est revêtue d'un matériau à faible coefficient de frottement.

6. Dispositif selon l'une quelconque des revendications 1 à 5 **caractérisé en ce que** chaque cale (30) présente une hauteur déterminée pour que son bord inférieur (30a) repose sur les équipements internes inférieurs (3) et que son bord supérieur (30b) supporte les équipements internes supérieurs (4) à un niveau situé au-dessus de la bride de cuve (1 b).

7. Dispositif selon la revendication 6 **caractérisé en ce qu'**au moins une face verticale de chaque cale (30) du côté de la cuve (1) est revêtue d'un matériau à faible coefficient de frottement.

8. Dispositif selon l'une quelconque des revendications précédentes, **caractérisé en ce qu'**il comprend deux châssis (22) opposés et répartis à 180° l'un par rapport à l'autre sur la bride de cuve (1 b).

9. Dispositif selon l'une quelconque des revendications 1 à 7, **caractérisé en ce qu'**il comprend trois châssis (22) répartis différemment les uns par rapport aux autres sur la bride de cuve (1b).

## Patentansprüche

1. Vorrichtung (20) zur momentanen Abstützung von oberen inneren Betriebsgeräten (4) auf einem Gefäß (1) eines Druckwasserkernreaktors während eines Vorganges der Beladung und Entladung des Kerns (2) nach dem Entfernen des Deckels (1a) zum Verschließen des Gefäßes (1), wobei das Gefäß (1) in seinem oberen Bereich einen Flansch (1b) zur Befestigung des Deckels (1a) aufweist und den Kern (2) bildende Brennstoffanordnungen enthält, **dadurch gekennzeichnet, dass** sie mindestens zwei Anordnungen (21) umfasst, die jeweils ein Gestell (22) aufweisen, das aus einem Mittelteil (23) zur Zentrierung und Positionierung auf dem Flansch des Gefäßes (1b) und zwei Seitenarmen (25) gebildet wird, die sich beidseitig des Mittelteils (23) erstrecken, wobei jeder Seitenarm (25) an seinem freien Ende (25a) einen Klotz (30) zur Zentrierung an dem Innenrand des Gefäßes (1) und zur Abstützung der oberen inneren Betriebsgeräte (4) über ihrer Position zur Befestigung an den unteren inneren Betriebsgeräten (3) aufweist.

2. Vorrichtung nach Anspruch 1, **dadurch gekennzeichnet, dass** der Mittelteil (23) des Gestells (22) eine Öffnung (24) in einer im Wesentlichen senkrechten Richtung und zur Zentrierung auf einem Führungselement (10), das auf dem Flansch des Gefäßes (1b) vorgesehen ist, aufweist.

3. Vorrichtung nach Anspruch 2, **dadurch gekennzeichnet, dass** das Führungselement von einer Säule (10) gebildet wird, die in einem Gewinde des Flansches des Gefäßes (1b) zum Zeitpunkt der Demontage des Deckels (1a) angeordnet ist.

4. Vorrichtung nach Anspruch 2, **dadurch gekennzeichnet, dass** das Führungselement von einem Führungsdorn des Deckels (1a) gebildet wird, der auf dem Flansch des Gefäßes (1b) vorgesehen ist.

5. Vorrichtung nach Anspruch 2, **dadurch gekennzeichnet, dass** die Innenwand der Öffnung (24) mit einem Material mit geringem Reibungskoeffizienten beschichtet ist.

6. Vorrichtung nach einem beliebigen der Ansprüche 1 bis 5, **dadurch gekennzeichnet, dass** jeder Klotz (30) eine Höhe aufweist, die so bestimmt ist, dass sein unterer Rand (30a) auf den unteren inneren Betriebsgeräten (3) ruht und dass sein oberer Rand (30b) die oberen inneren Betriebsgeräte (4) an einem Niveau abstützt, das über dem Flansch des Gefäßes (1b) liegt.

7. Vorrichtung nach Anspruch 6, **dadurch gekennzeichnet, dass** mindestens eine vertikale Fläche jedes Klotzes (30) an der Seite des Gefäßes (1) mit einem Material mit geringem Reibungskoeffizienten beschichtet ist.

8. Vorrichtung nach einem beliebigen der vorhergehenden Ansprüche, **dadurch gekennzeichnet, dass** sie zwei gegenüberliegende Gestelle (22) umfasst, die auf dem Flansch (1b) um 180° zueinander verteilt sind.

9. Vorrichtung nach einem beliebigen der Ansprüche 1 bis 7, **dadurch gekennzeichnet, dass** sie drei Gestelle (22) umfasst, die auf dem Flansch des Gefäßes (1b) unterschiedlich zueinander verteilt sind.

## Claims

1. A device (20) for momentary support for the upper internal parts (4) on a vessel (1) of a pressurized water reactor during a loading or unloading operation of the core (2) after removing a lid (1a) closing the vessel (1), said vessel (1) including, in the upper portion thereof, a flange (1 b) fastening the lid (1a) and containing fuel assemblies (7) forming the core (2), **characterized in that** it comprises at least two assemblies (21) each including a frame (22) formed by a central element (23) for centering and positioning on the vessel flange (1 b) and two lateral arms (25), extending on either side of the central portion (23), each lateral arm (25) having, at the free end (25a) thereof, a wedge (30) for centering on the inner edge of the vessel (1) and for supporting the upper inner parts (4) above the fixing position on the lower inner parts (3).

2. The device according to claim 1, **characterized in that** the central portion (23) of the frame (22) includes a substantially vertical centering opening (24) on a guide element (10) provided on the vessel flange (1 b).

3. The device according to claim 2, **characterized in that** the guide element is formed by a column (10) mounted in a tapping of the vessel flange (1 b), during disassembly of the lid (1a).

4. The device according to claim 2, **characterized in that** the guide element is formed by a guide pin of the lid (1 a), provided on the vessel flange (1 b).

5. The device according to claim 2, **characterized in that** the inner wall of the opening (24) is covered with a material with a low friction coefficient.

6. The device according to any one of claims 1 to 5, **characterized in that** each wedge (30) has a predetermined height so that its lower edge (30a) rests on the lower internal parts (3) and so that its upper edge (30b) supports the upper internal parts (4) at a level situated above the vessel flange (1b).

7. The device according to claim 6, **characterized in that** at least one vertical face of each wedge (30) on the side of the vessel (1) is covered with a material with a low friction coefficient.

8. The device according to any one of the preceding claims, **characterized in that** it comprises two opposite frames (22) separated by 180° relative to one another on the vessel flange (1 b).

9. The device according to any one of claims 1 to 7, **characterized in that** it comprises three frames (22) distributed differently relative to one another on the vessel flange (1b).
